# EUROPÄISCHE PATENTANMELDUNG

(11) **EP 1 477 764 A1**
(43) Veröffentlichungstag der Anmeldung: **17.11.2004**
(21) Anmeldenummer: 04010460.6
(22) Anmeldetag: 03.05.2004
(51) Int. Cl.: F42B 3/12, B60R 21/26

(54) **Anzünder zur Verwendung in einer Schutzvorrichtung für Fahrzeuginsassen**

(30) Priorität: 15.05.2003 DE 20307603 U
(71) Anmelder: TRW Airbag Systems GmbH, 84544 Aschau am Inn (DE)
(72) Erfinder: Enzmann, Ernst, 83224 Grassau (DE); Maier, Thomas, 84518 Garching (DE)
(74) Vertreter: Sulzbach, Werner, Dipl.-Chem. Dr.

(57) **Zusammenfassung**

Die Erfindung betrifft einen Anzünder (10) zur Verwendung in einer Schutzvorrichtung für Fahrzeuginsassen, mit einem Polkörper (12) und in den Polkörper (12) aufgenommenen Kontaktstiften (32) oder einem den Polkörper (12) mit den Kontaktstiften (32) umgebenden Polkörperring (42), einer an den Polkörper (12) oder den Polkörperring (42) angrenzenden Hülse (14) zur Aufnahme eines Zündmittels (16) und einen die Hülse (14) verschließenden Deckel (22) und ist dadurch gekennzeichnet, daß der Polkörper (12) und die Hülse (14) oder der Polkörperring (42) und die Hülse (14) einstückig miteinander gebildet sind.

## Beschreibung

Die Erfindung betrifft einen Anzünder zur Verwendung in einer Schutzvorrichtung für Fahrzeuginsassen, mit einem Polkörper und in den Polkörper aufgenommenen Kontaktstiften sowie ggf. einen den Polkörper umgebenden Polkörperring, einer an den Polkörper oder den Polkörperring angrenzenden Hülse zur Aufnahme eines Zündmittels und einen die Hülse verschließenden Deckel.

Eine herkömmliche Anzündvorrichtung für die Treibladung einer Insassenschutzvorrichtung ist beispielsweise in der DE 101 11 715 A1 beschrieben. Diese Anzündvorrichtung weist ein Gehäuse mit einem Sockel und einer mit diesem verbundenen metallenen Kappe auf. Auf den Sockel ist ein Paßring aufgesetzt, der in ein isolierendes Glasmaterial eingeschmolzene Kontaktstifte aufnimmt, deren Köpfe mit einem Widerstandsdraht verbunden sind. Eine auf den Paßring aufgesetzte Kunststoffhülse bildet zusammen mit der Metallkappe eine Zündkammer, in die ein Zündstoff eingefüllt ist. Der Zündstoff steht in Kontakt mit einem Widerstandsdraht. Die Kappe und der Paßring sind üblicherweise unter Ausbildung einer gas- und flüssigkeitsdichten Verbindung miteinander verschweißt. Die aus dem Sockel herausragenden Kontaktstifte können teilweise mit einem Kunststoffmantel umhüllt sein.

Die bekannten Anzünder haben den Nachteil, daß sie aus einer Vielzahl von Bauteilen aufgebaut sind und daher nicht kostengünstig hergestellt werden können. Die vorliegende Erfindung schafft demgegenüber einen Anzünder zur Verwendung in einer Schutzvorrichtung für Fahrzeuginsassen, der aufgrund seines unkomplizierten Aufbaus einfach und kostengünstig zu fertigen ist. Erfindungsgemäß wird dazu ein Anzünder bereitgestellt, mit einem Polkörper und in den Polkörper aufgenommenen Kontaktstiften sowie ggf. einen den Polkörper umgebenden Polkörperring, einer an den Polkörper oder den Polkörperring angrenzenden Hülse zur Aufnahme eines Zündmittels und einen die Hülse verschließenden Deckel, der dadurch gekennzeichnet ist, daß der Polkörper und die Hülse oder der Polkörperring und die Hülse einstückig miteinander gebildet sind.

Der erfmdungsgemäße Anzünder hat den Vorteil, daß die zur Aufnahme des Zündmittels dienende Hülse nicht mehr mit dem Polkörper bzw. dem Polkörperring verschweißt werden muß, wodurch ein zusätzlicher Fertigungsschritt entfällt. Des weiteren ist der erfindungsgemäße Aufbau mechanisch stabiler und damit weniger fehleranfällig.

Vorteilhafterweise sind der Polkörper und die Hülse einstückig miteinander aus einem Kunststoff, einem Harz oder einem anderen Stoff zur elektrischen Isolierung gebildet. Bei dieser Ausführungsform kann der Polkörperring vollständig entfallen. Die Herstellung des erfindungsgemäßen Anzünders kann nach üblichen Verarbeitungstechniken in einer Spritzgußform erfolgen. Damit ist eine besonders einfache Fertigungsmöglichkeit gegeben.

Alternativ dazu kann der Polkörper wie im Stand der Technik beschrieben aus Glas gebildet und von einem Polkörperring umgeben sein. In diesem Fall sind der Polkörperring und die Hülse einstückig miteinander aus Metall gebildet. Die Kontaktstifte sind gas- und flüssigkeitsdicht im Polkörper eingeschmolzen. Das einstückige Bauteil aus Polkörperring und Hülse kann bei dieser Ausführungsform auch gleichzeitig als Außengehäuse des Anzünders dienen. Auch in diesem Fall ist ein Aufbau des Anzünders aus wenigen Bauteilen und damit eine günstige Herstellung verwirklicht.

Besonders bevorzugt ist der Deckel in einem axialen Ende der Hülse aufgenommen. Der Deckel kann ferner eine randumlaufende Schulter aufweisen, die unmittelbar an das axiale Ende der Hülse angrenzt und mit diesem verbunden ist. Die Verbindung kann durch Schweißen, Kleben, Löten oder andere Verbindungstechniken erfolgen.

Durch den Deckel wird der Anzünder dicht, je nach Anforderung auch hermetisch dicht verschlossen. Der Deckel kann ferner eine Sollbruchstelle enthalten, welche ein definiertes Öffnungsverhalten ermöglicht. Zusätzlich kann der Deckel eine Vorrichtung enthalten, mit welcher der nach der Aktivierung des Zündmittels erzeugte Anzündstrahl in eine vordefinierte Richtung geleitet wird.

Die Kontaktstifte sind üblicherweise an eine mit dem Zündmittel in Kontakt stehenden Zündbrücke angeschlossen. Die Zündbrücke ist bevorzugt eine Widerstandsbrücke, eine Funkenbrücke oder eine Halbleiterbrücke.

Zwischen der Zündbrücke und dem Polkörper kann ein Spalt ausgebildet sein, durch den die Haftung des Zündmittels in der Hülse und der Kontakt zwischen der Zündbrücke und dem Zündmittel verbessert wird. Die Fixierung des Zündmittels in der Hülse kann außerdem durch eine entsprechende Gestaltung der Oberfläche des Polkörpers oder der Hülseninnenwand, z.B. durch auf den Polkörper oder die Innenwand aufgebrachte Noppen bzw. Längs- oder Querrillen, verbessert werden.

Schließlich können die Kontaktstifte im Polkörper wenigstens einen bogenförmigen Abschnitt bzw. Quetschungen, Stauchungen oder andere unregelmäßige Oberflächenstrukturen aufweisen. Dadurch werden die Dichtigkeit und die mechanische Stabilität des Anzünders weiter verbessert. Die Kontaktstifte lassen sich so weniger leicht aus dem Hohlkörper herausdrücken.

Zur Herstellung des erfindungsgemäßen Anzünders wird ein vorgefertigtes Bauteil aus dem Polkörper und der einstückig mit diesem gebildeten Hülse bereitgestellt, wobei die Kontaktstifte in den Polkörper aufgenommen sind und an die vom Polkörper und der Hülse begrenzte Zündkammer angrenzen. Oder, es wird ein Bauteil bereitgestellt, welches aus der einstückig gebildeten Satzhülse und dem Polkörperring mit einem darin eingeschmolzenen Polkörper aus Glas besteht. In den Polkörper aus Glas sind auch hier bereits die Kontaktstifte aufgenommen und grenzen an die vom Polkörper und der Satzhülse begrenzten Zündkammer an.

Anschließend wird die Zündbrücke axial in das Bauteil eingebracht und mittels Löten, Schweißen oder Kleben fest mit den Kontaktstiften verbunden. Falls als Zündbrücke ein Widerstandsdraht verwendet wird, kann der Widerstandsdraht durch seitliche Öffnungen in der Hülse in die Zündkammer eingeführt und ebenfalls durch Löten, Schweißen oder Kleben mit den Kontaktstiften verbunden werden. Die seitlichen Öffnungen in der Satzhülse können im fertigen Anzünder als radiale Abströmöffnungen dienen.

Die Beladung der Zündkammer mit dem Zündmittel kann durch ein Naßverfahren, beispielsweise durch Tauchen, oder durch Einpressen des pulverförmigen Zündmittels erfolgen. Anschließend wird der Deckel in die Satzhülse eingesetzt und durch Kleben, Löten oder Schweißen feuchtigkeitsdicht mit der Satzhülse verbunden.

Weitere Vorteile der Erfindung ergeben sich aus der nachfolgenden Beschreibung bevorzugter Ausführungsbeispiele und der beigefügten Zeichnung. In der Zeichnung zeigen:
- Figur 1 einen Schnitt durch einen erfindungsgemäßen Anzünder gemäß einer ersten Ausführungsform;
- Figur 2 einen Schnitt durch einen Anzünder gemäß einer zweiten Ausführungsform der Erfindung;
- Figur 3 einen Schnitt durch einen Anzünder gemäß einer dritten Ausführungsform der Erfindung;
- Figur 4 einen Schnitt durch einen Anzünder gemäß einer vierten Ausführungsform der Erfindung.

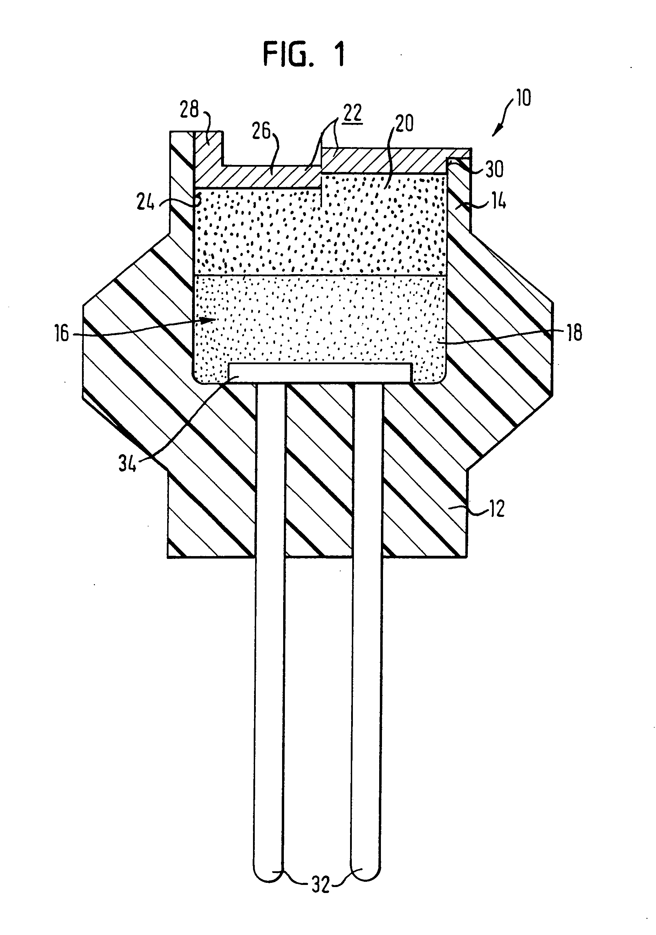

In Figur 1 ist ein erfindungsgemäßer Anzünder 10 gezeigt, der einen Polkörper 12 und eine Hülse 14 zur Aufnahme eines Zündmittels 16 aufweist. Der Polkörper 12 und die Hülse 14 sind bei der hier gezeigten ersten Ausführungsform einstückig miteinander aus Kunststoff gebildet. Das Zündmittel 16 kann, wie hier gezeigt, aus einem Primärzündmittel 18 und einem Sekundärzündmittel oder einer Verstärkerladung 20 zusammengesetzt sein. Es kann aber auch ein einheitlich zusammengesetztes Zündmittel oder ein aus mehr als zwei Komponenten bestehendes Zündmittel verwendet werden.

In ein axiales Ende der Hülse 14 ist ein Deckel 22 eingesetzt und durch Schweißen, Kleben oder Löten mit der Hülse 14 feuchtigkeitsdicht verbunden. Der Deckel 22 verschließt somit die von dem Polkörper 12 und der Hülse 14 umgrenzte Zündkammer 24. Bei der in der linken Hälfte von Figur 1 dargestellten Ausführungsform weist der Deckel einen auf dem Zündmittel 16 aufliegenden scheibenförmigen Abschnitt 26 und einen im wesentlichen rechtwinklig dazu angeordneten Wandabschnitt 28 auf. Der Wandabschnitt 28 grenzt direkt an die Innenfläche der Hülse 14 an und ist mit dieser feuchtigkeitsdicht verbunden. Bei der in der rechten Hälfte von Figur 1 gezeigten Ausführungsform weist der Deckel dagegen eine randumlaufende Schulter 30 auf. Bei dieser Ausführungsform liegt der Deckel sowohl an der Innenfläche der Hülse 14 als auch an deren Stirnseite an.

In dem Polkörper 12 sind zwei Kontaktstifte 32 gas- und feuchtigkeitsdicht aufgenommen. Jeweils ein Ende der beiden Kontaktstifte 32 grenzt an die Zündkammer 24 an und ist an eine Zündbrücke 34, bevorzugt eine Widerstandsbrücke, eine Funkenbrücke oder eine Halbleiterbrücke, angeschlossen. Bei der hier gezeigten Ausführungsform liegt die Zündbrücke 34 in der Zündkammer 24 direkt auf dem Polkörper 12 auf. Das Zündmittel 16 und die Zündbrücke 34 stehen in direktem Kontakt miteinander. Die aus dem Polkörper 12 herausragenden freien Enden der Kontaktstifte 32 dienen zur Verbindung mit einem korrespondierenden Stecker, der als Schnittstelle zu einer Sensor- und Auswerteeinheit dient. Bei einem Unfall des Kraftfahrzeugs wird über den Stecker ein elektrischer Impuls geliefert, der über die Zündbrücke 34 fließt. Diese erhitzt sich dabei und zündet das Zündmittel 16. Durch die Druckerhöhung in der Zündkammer 24 reißt die Verbindung zwischen der Hülse 14 und dem Deckel 22 bzw. eine im Deckel 22 vorhandene Sollbruchstelle auf. Mit den freigesetzten Verbrennungsprodukten des Zündmittels 16 wird dann die Treibladung einer Insassenschutzvorrichtung aktiviert.

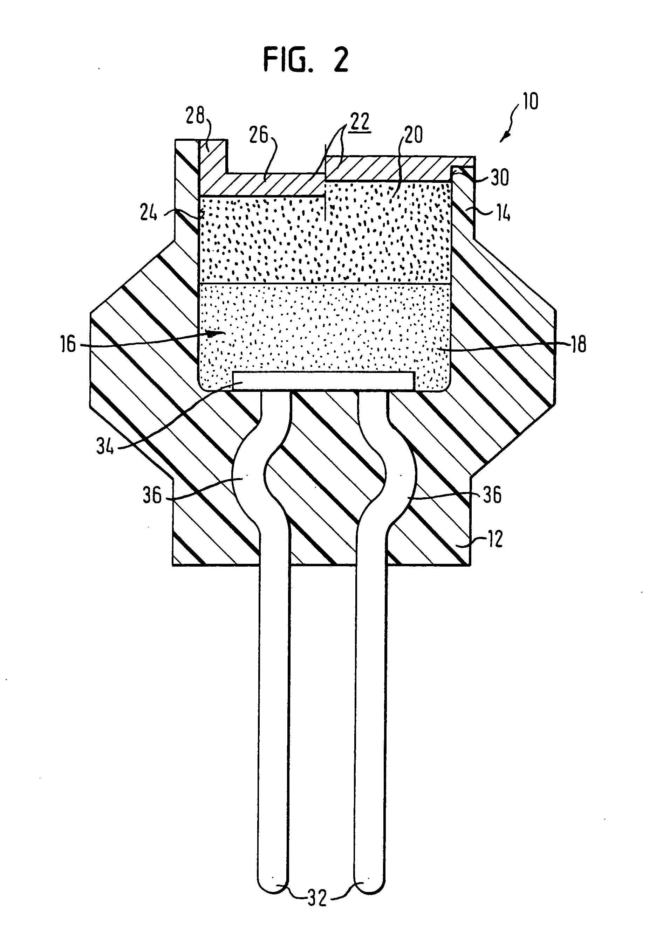

Bei der in Figur 2 gezeigten zweiten Ausführungsform des erfindungsgemäßen Anzünders 10 weisen die im Polkörper 12 aufgenommenen Kontaktstifte 32 einen bogenförmigen Abschnitt 26 auf. Dadurch ist die Verbindung zwischen den Kontaktstiften 32 und dem Polkörper 12 wesentlich verbessert und die mechanische Stabilität des Anzünders 10 erhöht. Die Kontaktstifte 32 lassen sich hier weniger leicht aus dem Polkörper 12 herausdrücken. Alle übrigen Teile des in Figur 2 gezeigten Anzünders entsprechen in ihrem Aufbau und ihrer Funktion denen der ersten Ausführungsform.

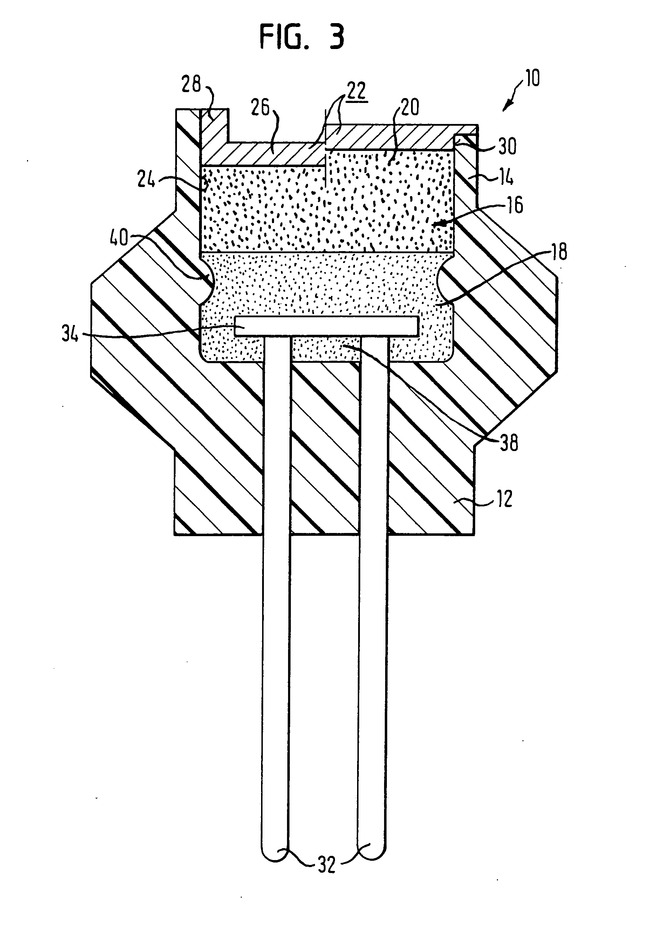

Bei der in Figur 3 gezeigten Ausführungsform des erfindungsgemäßen Anzünders 10 ragen die Kontaktstifte 32 in die Zündkammer 24 hinein. Zwischen der Zündbrücke 34 und dem Polkörper 12 ist damit ein Spalt 38 ausgebildet, der ebenfalls mit Zündmittel 16 gefüllt ist. Dadurch kann das Zündmittel sicher in der Zündkammer 24 fixiert werden. Außerdem ist der Kontakt zwischen Zündmittel 16 und Zündbrücke 34 verbessert.

Die Hülse 14 ist an ihrer Innenfläche außerdem mit einem radial einwärts gerichteten Wulst 40 versehen, der bevorzugt umlaufend geschlossen ausgebildet ist. Auch der Wulst 40 dient zur zusätzlichen Fixierung des Zündmittels 16 in der Zündkammer 24. Als weitere Fixierungsmittel können beispielsweise im Boden oder an den Seitenwänden der Zündkammer 24 ausgebildete Querrillen, Längsrillen oder Noppen vorgesehen sein.

Alle weiteren Teile der in Figur 3 gezeigten Ausführungsform des Anzünders 10 entsprechen in ihrem Aufbau und ihrer Funktion den in Figur 1 gezeigten Teilen, wobei gleiche Teile mit gleichen Bezugszeichen bezeichnet sind.

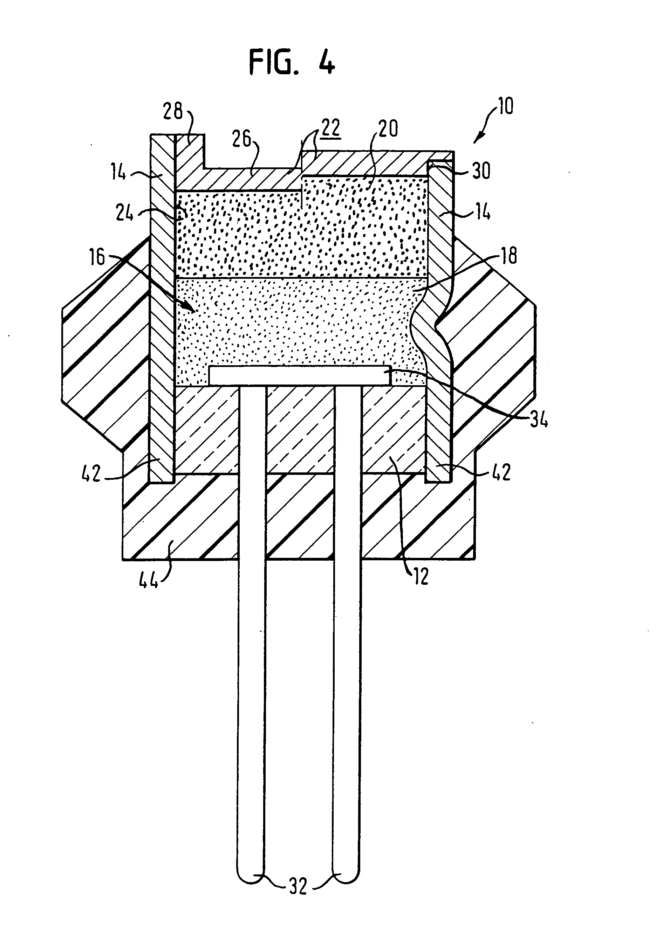

In Figur 4 ist ein erfindungsgemäßer Anzünder 10 gezeigt, der einen Polkörper 12 mit in den Polkörper gas- und feuchtigkeitsdicht aufgenommenen Kontaktstiften 32 zeigt. Der Polkörper 12 ist hier aus Glas gebildet und in einem Polkörperring 42 aufgenommen. Der Polkörperring 42 grenzt an eine Hülse 14 zur Aufnahme eines Zündmittels 16 an und ist mit dieser einstückig aus Metall gebildet. Das Zündmittel 16 kann auch hier aus einem Primärzündmittel 18 und einem Sekundärzündmittel oder einer Verstärkerladung 20 zusammengesetzt sein.

In das dem Polkörper 12 gegenüberliegende axiale Ende der Hülse 14 ist ein Deckel 22 eingesetzt und mit der Hülse 14 durch Schweißen, Kleben oder Löten verbunden. Wie bei den zuvor gezeigten Ausführungsformen kann der Deckel einen scheibenförmigen Abschnitt 26 und einen im wesentlichen rechtwinklig dazu angeordneten Wandabschnitt 28 aufweisen. Der Wandabschnitt 28 liegt an der Innenfläche der Hülse 14 an und ist mit dieser durch Schweißen, Kleben oder Löten feuchtigkeitsdicht verbunden. Dies ist in der linken Hälfte der Figur 4 dargestellt. Alternativ dazu kann an dem Deckel eine randumlaufende Schulter 30 ausgebildet sein. Der Deckel 22 ist dann mit der Schulter 30 in die Hülse 14 eingesetzt und liegt sowohl an der Innenfläche der Hülse 14 als auch an deren Stirnseite an. Der Kontaktbereich zwischen dem Deckel 22 bzw. der Schulter 30 und der Hülse 14 ist auch hier feuchtigkeitsdicht durch Schweißen, Kleben oder Löten verschlossen.

Der Polkörper 12, die Hülse 14 und der Deckel 22 umgrenzen bei der hier gezeigten Ausführungsform die Zündkammer 24. Am Boden der Zündkammer 24, auf dem Polkörper 12, ist eine Zündbrücke 34 vorgesehen, an die die Kontaktstifte 32 angeschlossen sind. Die gegenüberliegenden freien Enden der Kontaktstifte 32 werden, wie oben beschrieben, in einen korrespondierenden Stecker gesteckt. Die Zündbrücke 34 kann einen Widerstandsdraht, eine Funkenbrücke oder eine Halbleiterbrücke sein. Sie steht in direktem Kontakt mit dem Zündmittel 16, um eine sichere Zündung zu gewährleisten.

Die aus dem Polkörper 12 heraustretenden Kontaktstifte 32 sowie der Polkörperring 42 und Teile der Hülse 14 können zur besseren Abdichtung des Anzünders 10 noch mit einer Kunststoffummantelung 44 versehen sein, mit der die Einbaumaße des Zünders festgelegt werden können. Die Kontaktstifte 32 können, wie im Zusammenhang mit der in Figur 2 beschriebenen Ausführungsform, einen bogenförmigen Abschnitt im Polkörper 12 oder eine in anderer Weise veränderte Oberflächenstruktur aufweisen. Zwischen der Zündbrücke 34 und dem Polkörper 12 kann ein Spalt vorgesehen sein, wie dies in Figur 3 gezeigt ist.

Schließlich kann die Hülse 14 zur besseren Fixierung des Zündmittels 16 in der Zündkammer 24 Ein- oder Ausbuchtungen 46 aufweisen, oder es können, wie oben beschrieben, Längsrillen, Querrillen oder Noppen am Polkörper 12 bzw. der Innenfläche der Hülse 14 ausgebildet sein.

Zur Herstellung des in Figur 4 gezeigten Anzünders wird der Polkörper 12 mit den Kontaktstiften 32 in ein den Polkörperring 42 definierendes unteres Ende der Hülse 14 eingeschmolzen. Danach wird die Zündbrücke 34 in axialer Richtung in die Hülse 14 eingeführt und beispielsweise durch Kleben leitend mit den Enden der Kontaktstifte 32 verbunden. Anschließend wird das Primärzündmittel 18 und ggf. das Sekundärzündmittel oder die Verstärkerladung 20 in flüssiger oder fester Form in die Hülse 14 eingebracht, so daß ein sicherer Kontakt mit der Zündbrücke 34 gewährleistet ist. Schließlich wird der Deckel 22 in das dem Polkörperring 12 gegenüberliegende freie axiale Ende der Hülse 14 eingesetzt und feuchtigkeitsdicht mit dieser verbunden. Zur besseren Abdichtung können die aus dem Polkörper 12 heraustretenden Kontaktstifte 32 in einer Spritzform noch mit einer Kunststoffummantelung 44 umspritzt werden.

Der oben beschriebene Anzünder ist einfach aufgebaut und läßt sich daher kostengünstig herstellen.

## Patentansprüche

1. Anzünder (10) zur Verwendung in einer Schutzvorrichtung für Fahrzeuginsassen, mit einem Polkörper (12) und in den Polkörper (12) aufgenommenen Kontaktstiften (32) oder einem den Polkörper (12) mit den Kontaktstiften (32) umgebenden Polkörperring (42), einer an den Polkörper (12) oder den Polkörperring (42) angrenzenden Hülse (14) zur Aufnahme eines Zündmittels (16) und einen die Hülse (14) verschließenden Deckel (22), **dadurch gekennzeichnet, daß** der Polkörper (12) und die Hülse (14) oder der Polkörperring (42) und die Hülse (14) einstückig miteinander gebildet sind.

2. Anzünder nach Anspruch 1, **dadurch gekennzeichnet, daß** der Polkörper (12) und die Hülse (14) einstückig miteinander aus einem Kunststoff, einem Harz oder einem anderen Stoff zur elektrischen Isolierung gebildet sind.

3. Anzünder nach Anspruch 1, **dadurch gekennzeichnet, daß** der Polkörper (12) aus Glas gebildet und von einem Polkörperring (42) umgeben ist, und daß der Polkörperring (42) und die Hülse (14) einstückig miteinander aus Metall gebildet sind.

4. Anzünder nach einem der Ansprüche 1 bis 3, **dadurch gekennzeichnet, daß** der Deckel (22) in einem axialen Ende der Hülse (14) aufgenommen ist.

5. Anzünder nach Anspruch 4, **dadurch gekennzeichnet, daß** der Deckel (22) eine randumlaufende Schulter (30) aufweist, die unmittelbar an das axialen Ende der Hülse (14) angrenzt und mit diesem verbunden ist.

6. Anzünder nach einem der Ansprüche 1 bis 5, **dadurch gekennzeichnet, daß** das Zündmittel (16) wenigstens ein Primärzündmittel (18) und vorzugsweise ein oder mehrere zusätzliche Sekundärzündmittel (20), umfaßt.

7. Anzünder nach einem der vorhergehenden Ansprüche, **dadurch gekennzeichnet, daß** die Kontaktstifte (32) an eine mit dem Zündmittel (16) in Kontakt stehende Zündbrücke (34) angeschlossen sind.

8. Anzünder nach Anspruch 7, **dadurch gekennzeichnet, daß** die Zündbrücke (34) eine Widerstandsbrücke, eine Funkenbrücke oder eine Halbleiterbrücke ist.

9. Anzünder nach einem der vorhergehenden Ansprüche, **dadurch gekennzeichnet, daß** die Kontaktstifte (32) im Polkörper (12) wenigstens einen bogenförmigen Abschnitt (36) aufweisen.
